# EUROPEAN PATENT APPLICATION

(11) **EP 1 106 062 A1**
(43) Date of publication of application: **13.06.2001**
(21) Application number: 00302591.3
(22) Date of filing: 29.03.2000
(51) Int. Cl.: A01K 89/00

(54) **Stem cushion grip, and method of assembly, for fishing reel**

(30) Priority: 06.12.1999 US 455274
(71) Applicant: BRUNSWICK CORPORATION, Lake Forest, Illinois 60045-4811 (US)
(72) Inventor: Young, Jue Kang, Tulsa, Oklahoma 74134 (US)
(74) Representative: Thomson, Paul Anthony

(57) **Abstract**

For an under-the-rod type fishing reel including a foot structure for securing the fishing reel on a fishing rod (10), a reel body, and a reel stem (32) extending between the foot (20) structure and the reel body (30), the improvement provided by the present invention preferably comprises a preformed elastic band (52) placed on the reel stem (32) by an inventive method wherein the elastic band (52) is preferably stretched over either the foot (20) structure or the body (30) of the reel and allowed to contract around and onto the reel stem (32). The elastic band (52) provides at least one contacting surface (54,56) on the reel stem for a user's fingers. The elastic band (52) preferably contracts into a recess (58) formed around the reel stem (32) and having a shape corresponding to that of the elastic band (52).

## Description

### FIELD OF THE INVENTION

The present invention relates to cushion grip elements for fishing reels and methods of installing such elements.

### BACKGROUND OF THE INVENTION

Spinning reels and other under-the-rod type fishing reels typically comprise: an elongate mounting foot; a reel body; and a reel stem extending between the mounting foot and the reel body. The mounting foot and stem cooperatively form a T shape. When fishing, the user will typically hold the rod and reel combination by placing his or her index and middle fingers beneath the rod on opposite sides of the reel stem and using the index and middle fingers to hold the fishing rod portion against the palm of the hand.

In a typical construction, the mounting foot and stem of a spinning reel will be made from metal, plastic, a composite, or other hard material. Pressure contact by the index finger, middle finger and thumb against such hard materials when casting and when retrieving the fishing line can be uncomfortable, particularly after long periods of use, and can in some cases cause blisters. Users may experience such discomfort even if the contact surfaces are smooth and contoured.

### SUMMARY OF THE INVENTION

The present invention provides a stem cushion grip which alleviates the problems discussed above. The present invention also provides a method of installing the cushion grip which is easier, requires less time, and is more cost effective than other methods used heretofore for installing cushions and/or gripping structures on fishing reels.

In one aspect, the present invention provides an improvement for an under-the-rod type fishing reel. The under-the-rod type fishing reel includes: a foot structure for securing the fishing reel on a fishing rod; a reel body; and a reel stem extending between the foot structure and the reel body. The improvement provided by the present invention comprises a preformed, endless elastic band placed on the reel stem by stretching such that the band extends around and is contracted onto the reel stem. The elastic band provides at least one contacting surface on the reel stem for the user's fingers. The improvement preferably also includes a recess formed in and around the outer surface of the reel stem and having a shape corresponding to that of the elastic band such that the elastic band will contract into the recess.

In another aspect, the present invention provides a method of placing a contacting surface for a user's fingers on the reel stem of an under-the-rod type fishing reel. The inventive method comprises the step of placing a preformed, endless elastic band on the reel stem by stretching the elastic band around either the foot structure or the body of the fishing reel and then onto the reel stem such that the elastic band extends around and contracts onto the stem. The elastic band provides at least one contacting surface on the reel stem. The inventive method preferably also comprises the step of forming a recess in and around the reel stem. The recess has a shape corresponding to that of the elastic band such that, in the above-mentioned step of placing the elastic band on the reel stem, the elastic band contracts into the recess.

Further objects, features, and advantages of the present invention will be apparent upon examining the accompanying drawings and upon reading the following description of the preferred embodiments.

### BRIEF DESCRIPTION OF THE DRAWINGS

Figure 1 provides an elevational side view of a conventional spinning reel removably secured beneath a fishing rod **10**.

Figure 2 provides a front perspective view of an inventive spinning reel frame **50** having an inventive cushion grip **52** installed around the stem **32** of the frame.

Figure 3 provides a rear perspective view of inventive frame **50** having inventive cushion grip **52** installed thereon.

Figure 4 provides a front perspective view of inventive frame **50**.

Figure 5 provides an elevational side view of inventive cushion grip **52**.

### DETAILED DESCRIPTION OF THE PREFERRED EMBODIMENTS

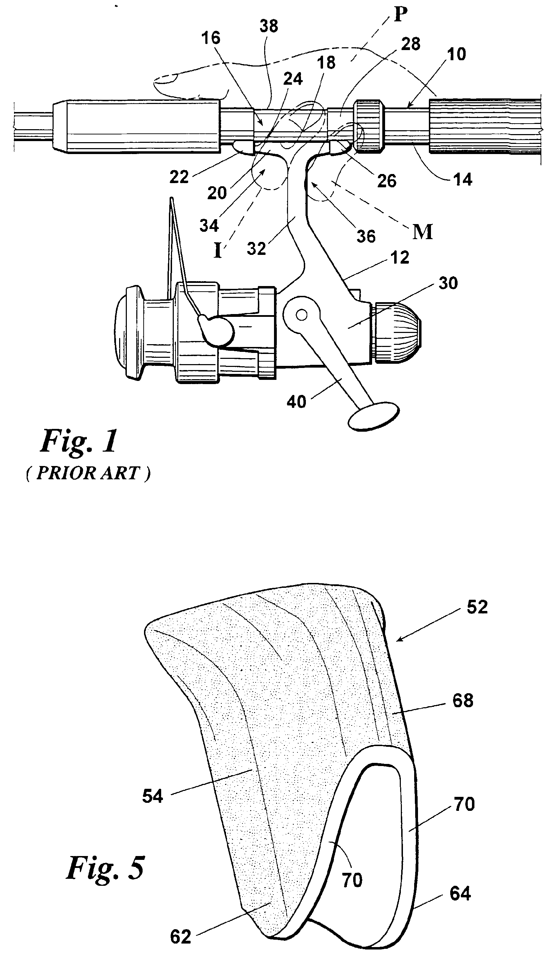

In Fig. 1, a conventional fishing rod **10** is shown with a conventional under-the-rod type spinning reel **12** mounted thereon. The fishing rod **10** has an elongate body **14** that has a mounting region at **16** which defines a seating surface **18** for the elongate mounting foot **20** of the fishing reel **12**. The forward portion **22** of the mounting foot **20** seats in a receptacle **24** defined on the fishing rod **10**. The rear portion **26** of the mounting foot **20** is maintained against the seating surface **18** by a locking ring **28** that is slidable lengthwise on the fishing rod **10** between (a) a release position wherein the fishing reel **12** can be selectively placed in the operative position of Fig. 1 and separated from the fishing rod **10** and (b) a locking position, as shown in Fig. 1, wherein the mounting foot **20** is captive in fixed position against the rod surface **18**. This mounting arrangement is common to "under-the-rod" type reels, such as spinning reels, which are well known in the art.

The mounting foot **20** is connected to the body **30** of the fishing reel **12** through a depending mounting stem **32**. This arrangement defines regions **34**, **36**, fore and aft of the mounting stem **32**, which accommodate the fingers of the user's hand. For a right-handed user as illustrated in Fig. 1, the palm P of the right hand is placed against the upper rod surface **38**. The user's index finger I and middle finger M are curled underneath the rod **10** to straddle the mounting stem **32**, and draw the rod surface **38** into the palm P. This position is maintained both when casting and retrieving the fishing line, the latter being accomplished by rotating the reel's crank handle **40** using the left hand.

Typically, the mounting foot **20**, mounting stem **32**, and reel body **30** are made from a hard material, such as metal, plastic, or a composite. As the user casts and retrieves the fishing line, the contacted surfaces of fishing reel **12** tend to abrade the user's hand. This is particularly true with respect to corner surfaces and irregularities that are inevitably formed on virtually all types of fishing reels. Eventually, such contact and abrasion may lead to significant discomfort and, in some cases, the development of blisters.

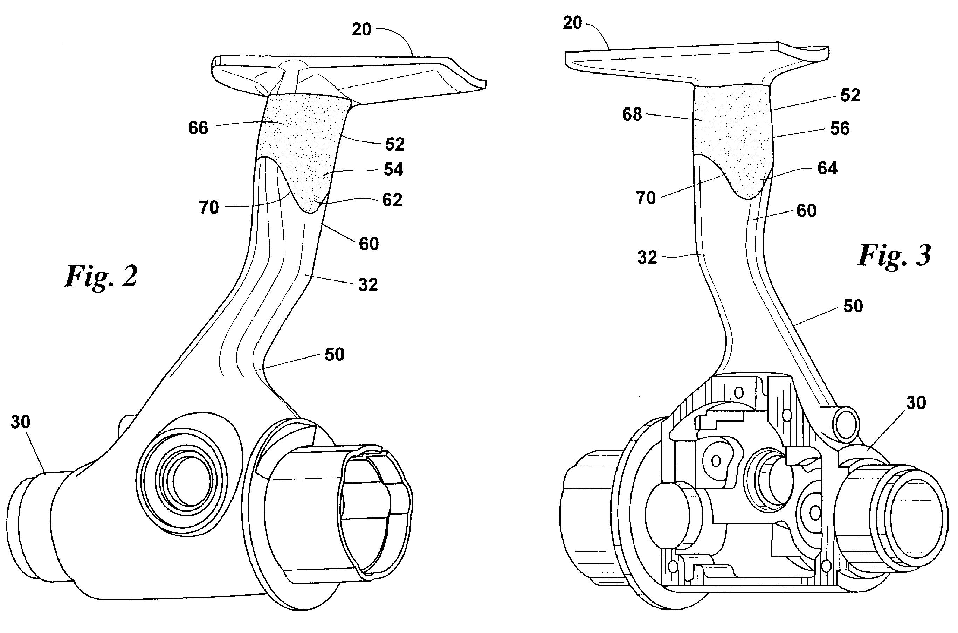

An embodiment of the improvement provided by the present invention is illustrated in Figs. 2-5. Shown in Figs. 2, 3, and 4 is a reel frame structure **50** of the type commonly employed in spinning reels **12** such as the one depicted in prior art Fig. 1. Thus, as in reel **12**, the frame structure **50** includes: a foot structure **20** for securing the reel on a fishing pole **10**; a body structure **30**; and a stem structure **32** extending between foot **20** and body **30**. In accordance with the present invention, a preformed, endless elastic band **52** is positioned around the upper portion of stem structure **32** to preferably provide both a forward contact surface **54** and a rearward contact surface **56**.

As used herein and in the claims, the terms "elastic" and "elastic material" refer to any material capable of being stretched and then snapping back to, or otherwise quickly resuming, its original shape. The term "endless" generally refers to a continuous, loop-type structure.

The particular material employed in forming elastic band **52** will preferably be sufficiently elastic such that, in accordance with the assembly method of the present invention, band **52** (a) can be stretched to a degree necessary to allow either foot structure **20** or body structure **30** (preferably foot structure **20**) to be inserted through the stretched band **52** and then (b) will contract tightly around stem structure **32**. Elastic band **52** will preferably contract around stem structure **32** with a sufficient degree of tightness to at least assist in maintaining band **52** in fixed position on stem **32**. The elastic material used in forming band **52** will also preferably be sufficiently soft and compressible such that contact surfaces **54** and **56** will cushion the user's touch. Contact surfaces **54** and **56** can also improve the user's grip by conforming at least somewhat to the user's touch, thereby increasing the amount of contact area provided against the user's fingers I and M. The user's grip can further be improved by using an elastic material having any desired amount of tack.

Examples of materials suitable for forming elastic band **52** include, but are not limited to, generally any elastomeric material, rubber, thermoplastic rubbers, and ethylene vinyl acetates.

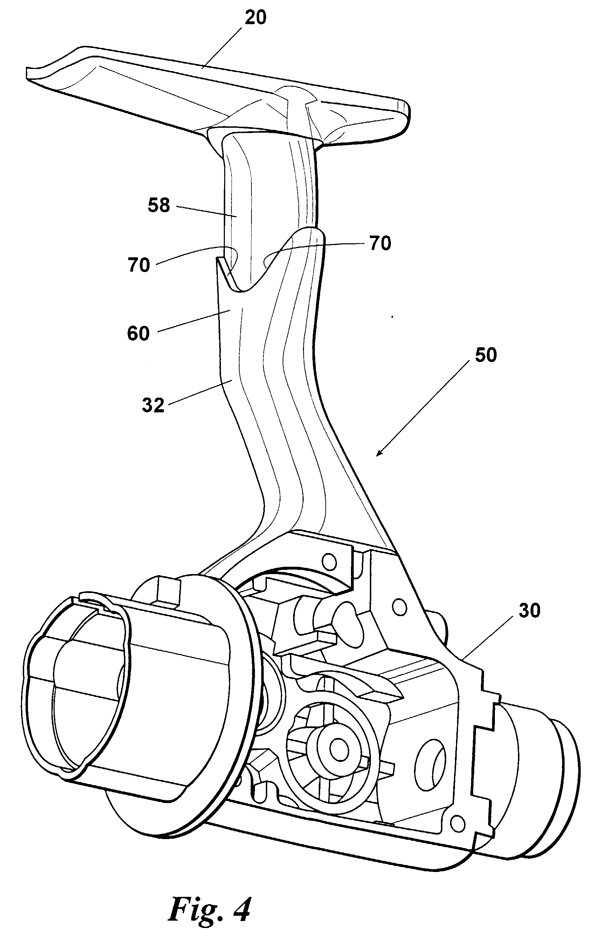

As shown in Fig. 4, a recess **58** is preferably formed around the upper portion of stem **32** for receiving elastic band **52**. As also shown in Figs. 2-5, elastic band **52** preferably has a shape corresponding to that of recess **58** such that band **54** contracts tightly into recess **58**. Additionally, the depth of recess **58** is preferably such that, when contracted into recess **58**, elastic band **52** is at least substantially flush with the outer surface **60** of stem **32**. By placing elastic band **52** flush with the outer surface **60** of stem structure **32**, the transition between band **52** and stem **32** is made sufficiently smooth to minimize the presence of edges, obstructions, or other anomalies which could form blisters on the user's fingers or otherwise cause discomfort.

As further shown in Figs. 2-5, the lower portions **62**, **64** of contact surfaces **54** and **56** as well as the corresponding portions of recess **52**, preferably project downwardly a sufficient distance to fully accommodate the user's fingers I and M. Additionally, because contact surfaces **54** and **56** project downwardly a greater distance than do the sides **66**, **68** of elastic band **52** and recess **58**, downwardly and upwardly sloping contact edges **70** are created between elastic band **52** and recess **58** which assists in preventing elastic band **52** from rotating within recess **58**.

To further assist in retaining elastic band **52** in fixed position on stem structure **32**, an adhesive can be applied between stem structure **32** and the interior surface of elastic band **52**. However, to facilitate assembly and minimize cost, it is preferred that elastic band **52** be held in fixed position on stem structure **32** by sizing and selecting band **52** to ensure a tight fit and by employing a band and recess shape which will assist in preventing band **52** from rotating on stem structure **32**. Further, if an adhesive is not used, elastic band **52** can, if necessary or desired, be readily removed and replaced.

When reel **12** is improved in accordance with the present invention, the user grasps the rod and reel combination, in the same manner as illustrated in Fig. 1, such that the palm is initially placed against the upper surface **38** of the rod with the index finger I being curled under the mounting foot **20** and bearing against the forwardly facing contact surface **54**. The middle finger M curls under the mounting foot **20** and bears against the rearward contact surface **56**. By applying a slight pinching force between the index and middle fingers, the mounting stem **32** and cushion members **54** and **56** are held between the index and middle fingers. Thus, contact surfaces **54** and **56** provide a comfortable grip for the user.

## Claims

1. An under-the-rod type fishing reel including a foot structure for securing said fishing reel on a fishing rod, a reel body, and a reel stem extending between said foot structure and said reel body, wherein the improvement comprises a preformed, endless elastic band placed on said reel stem by stretching such that said elastic band extends around and is contracted onto said reel stem, said elastic band providing at least one contacting surface on said reel stem for a user's fingers.

2. The fishing reel of claim 1 wherein said improvement further comprises a recess formed in and extending around said reel stem, said recess having a shape corresponding to that of said elastic band such that, when said elastic band is placed on said reel stem, said elastic band contracts into said recess.

3. The fishing reel of claim 2 wherein said shape is effective for preventing said elastic band from rotating on said reel stem.

4. The fishing reel of claim 2 wherein said recess has a depth such that, when contracted into said recess, said elastic band is substantially flush with an outer surface of said reel stem.

5. The fishing reel of claim 1 wherein said elastic band provides at least two of said contacting surfaces.

6. The fishing reel of claim 1 wherein said elastic band is sufficiently elastic to allow said elastic band to be placed on said reel stem by stretching said elastic band around at least one of said foot structure and said reel body.

7. The fishing reel of claim 1 wherein said contacting surface is a cushioning surface for said user's fingers.

8. The fishing reel of claim 1 wherein said contacting surface is a gripping surface for said user's fingers.

9. A method of placing a contacting surface for a user's fingers on an under-the-rod type fishing reel, said fishing reel having a foot structure for securing said fishing reel on a fishing rod, a reel body, and a reel stem extending between said foot structure and said reel body, and said method comprising the step of placing an elastic band on said reel stem by stretching said elastic band around one of said foot structure and said reel body and then onto said reel stem such that said elastic band extends around and contracts onto said reel stem and provides at least one contacting surface on said reel stem.

10. The method of claim 9 wherein said reel stem has an outer surface and said method further comprises the step of forming a recess in said outer surface around said reel stem, said recess having a shape corresponding to that of said elastic band such that, in said step of placing, said elastic band contracts into said recess.
